# EUROPÄISCHE PATENTSCHRIFT

(11) **EP 2 602 681 B1**
(45) Veröffentlichungstag und Bekanntmachung des Hinweises auf die Patenterteilung: **11.01.2017**
(21) Anmeldenummer: 12195091.9
(22) Anmeldetag: 30.11.2012
(51) Int. Cl.: G05B 19/406, B25J 9/16, G06T 19/00

(54) **Verfahren zum Steuern eines Telemanipulations-Roboters**
Method for telemanipulating a robot
Procédé de télémanipulation d'un robot

(30) Priorität: 05.12.2011 DE 102011087743; 10.10.2012 US 201261711887 P
(43) Veröffentlichungstag der Anmeldung: 12.06.2013
(73) Patentinhaber: Deutsches Zentrum für Luft- und Raumfahrt e.V., 51147 Köln (DE)
(72) Erfinder: Hulin, Thomas, 82178 Puchheim (DE); Konietschke, Dr., Rainer, 82237 Wörthsee (DE); Jörg, Stefan, 81241 München (DE); Klodmann, Julian, 81245 München (DE)
(74) Vertreter: dompatent von Kreisler Selting Werner - Partnerschaft von Patent- und Rechtsanwälten mbB

(56) Entgegenhaltungen:
- DE-A1- 10 305 384

## Beschreibung

Derartige Roboter können beispielsweise in der Telechirurgie, in der Telemanipulation von Roboterarmen im Weltraum oder in gefährlichen Umgebungen, beispielsweise in radioaktiv verseuchten oder verminten Gebieten eingesetzt werden.

Allen diesen Anwendungsformen ist gemein, dass eine Anzeigevorrichtung, beispielsweise ein Display vorgesehen ist, über das die Bewegungen eines Roboter- oder Manipulatorarms dem Benutzer angezeigt werden. Zusätzlich oder alternativ hierzu können dem Benutzer auch der Operationssitus, in dem der Manipulationsarm operiert, angezeigt werden.

Die Gelenke von Roboterarmen haben häufig kinematische Begrenzungen, so dass sie nicht beliebig verfahren werden können. Diese Begrenzungen können beispielsweise mechanische Gelenkanschläge sein, die durch die mechanische Struktur des Roboters oder durch Anschlagpuffer gegeben sind. Letztere erfüllen den Zweck einer Kollisionsvermeidung des Roboters mit der Roboterstruktur oder der Umgebung. Weiterhin soll eine Beschädigung von Daten- und Stromkabeln vermieden werden. Ferner können Robotersysteme zusätzliche softwareseitige Begrenzungen der Gelenkarbeitsräume in Form von Software-Endanschlägen aufweisen. Diese sollen zum Schutz des Roboters Kollisionen mit Hindernissen oder kinematischen Begrenzungen des Roboters (Hardware-Endanschläge) verhindern.

Bei der Steuerung eines Telemanipulations-Roboters mittels eines Eingabegeräts, beispielsweise eines Joysticks, einer Maus oder einer Tastatur kann der gesteuerte Roboterarm die Gelenkendanschläge erreichen. Diese schränken somit die Bewegung des Endeffektors ein, der am Roboterarm befestigt ist. Dabei ist es relevant, ob die Anschläge am telemanipulierten Roboterarm (Slave) oder am Eingabegerät (Master) auftreten. Oft ist es für den Bediener nicht sofort ersichtlich, woher eine Bewegungseinschränkung kommt. Dieses Problem tritt vor allem dann auf, wenn der Roboter im Rahmen der beschriebenen Telemanipulation gesteuert wird und die Sicht des Bedieners auf den Roboter eingeschränkt ist. Der Bediener sieht somit lediglich eine durch eine Kamera aufgenommene Darstellung des Roboterarms und des Operationssitus auf einer Anzeigevorrichtung. In solchen Fällen treten Gelenkanschläge für den Anwender überraschend auf, da die durch den Anschlag blockierte Richtung für ihn nicht vorhersehbar ist.

Die Druckschrift DE 103 05 384 A1 beschreibt ein Verfahren und eine Vorrichtung zum Visualisieren rechnergestützter Informationen zur Verbesserung der Bedienung von Robotern beim Einrichten, Umprogrammieren oder Leeren eines von diesem durchzuführenden Arbeitsablaufs.

Weitere technische Hintergrundinformationen sind in folgender Veröffentlichung zu finden: - Antal K. Bejczy, Steven Venema, Won S. Kim: Role of Computer Graphics in Space Telerobotics: Preview and Predictive Displays, in Cooperative Intelligent Robotics in Space, 1990.

Aufgabe der Erfindung ist es, ein Verfahren zum Steuern eines Telemanipulations-Roboters bereitzustellen, das eine intuitive Vermeidung oder Beseitigung von Kollisionen des Manipulatorarms des Roboters ermöglicht.

Die Lösung der Aufgabe erfolgt erfindungsgemäß durch die Merkmale des Anspruchs 1.

Ein Telemanipulations-Roboter, der durch das erfindungsgemäße Verfahren steuerbar ist, umfasst mindestens einen Manipulatorarm, der durch eine Eingabevorrichtung auf Basis von Eingabefeldern eines Benutzers steuerbar ist. Diese Eingabevorrichtung kann beispielsweise ein haptisches Gerät, ein Joystick, eine Maus oder Ähnliches sein. Der Telemanipulations-Roboter umfasst eine Anzeigevorrichtung, durch die die Bewegungen des mindestens einen Manipulatorarms und/ oder der Operationssitus, in dem der Manipulatorarm operiert, dem Benutzer angezeigt werden. Der Begriff Operationssitus bezieht sich in diesem Zusammenhang nicht lediglich auf den Bereich der Medizintechnik. Vielmehr wird hierunter jegliche Umgebung verstanden, in der der Manipulatorarm eines Telemanipulationsroboters operieren kann. Zum Ausführen der Bewegungen des Manipulatorarms des Telemanipulationsroboters werden die durch den Benutzer hervorgerufenen Bewegungen in der Eingabevorrichtung erfasst. Auf Basis dieser Eingabebefehle wird der Manipulatorarm unter Verwendung von Antrieben bewegt. Der Manipulatorarm führt somit die Bewegung aus, die vom Benutzer durch die Eingabevorrichtung vorgegeben wird.

Erfindungsgemäß wird eine kinematische Begrenzung des Arbeitsraums, in dem der mindestens eine Manipulatorarm operieren kann oder darf, in der Anzeigevorrichtung grafisch angezeigt. Bei der kinematischen Begrenzung des Arbeitsraums kann es sich um eine softwareseitige oder eine hardwareseitige Begrenzung handeln. Beispielsweise kann die kinematische Begrenzung dadurch verursacht sein, dass ein Gelenk des Manipulatorarms seinen Endanschlag erreicht und nicht über diese Position hinaus bewegt werden kann.

In der Darstellung des Manipulatorarms und/ oder des Operationssitus auf der Anzeigevorrichtung, beispielsweise einem Display sieht der Benutzer somit intuitiv, wo eine Begrenzung des Arbeitsraums existiert und kann diese Begrenzung daher entsprechend berücksichtigen. Sofern der Benutzer den Manipulatorarm willentlich oder unwillentlich gegen diese Begrenzung steuert, erkennt er intuitiv auf der Anzeigevorrichtung, wodurch die kinematische Begrenzung des Arbeitsraums, die er möglicherweise durch eine Feedback-Vorrichtung in der Eingabevorrichtung spürt, verursacht wird. Erfindungsgemäß ist es somit auf sehr einfache Weise möglich, kinematische Begrenzungen des Arbeitsraums zu berücksichtigen, oder auf solche zu reagieren.

Das erfindungsgemäße Verfahren kann beispielsweise bei einem Training des Umgangs mit dem Roboter in der virtuellen Realität verwendet werden. Hierbei kann dem Anwender ein schnelles Erlernen der Arbeitsraumlimitierungen und Gelenkgrenzen ermöglicht werden. Ferner kann das erfindungsgemäße Verfahren im Rahmen eines sogenannten "Programming-By-Demonstration"-Verfahrens angewendet werden. Hierdurch wird ein besonderes einfaches Programmieren von Roboterbewegungen ermöglicht, indem der Anwender den Roboter mit der Hand führt und dem Roboter dadurch eine Bewegung zeigt. Die Erfindung kann hierbei eingesetzt werden, um Bewegungen zu programmieren, die das Erreichen von Arbeitsraumlimitierungen vermeiden.

Es ist bevorzugt, dass die Position und Lage einer Begrenzung des Arbeitsraumes in dem Koordinatensystem der tatsächlichen Realität in das kartesische Koordinatensystem der Anzeigevorrichtung transformiert werden. Dort können sie beispielsweise in Form einer virtuellen oder augmentierten Realität angezeigt werden. Mit anderen Worten, wird die Position und Lage der Arbeitsformbegrenzung, die eigentlich nur in dem Koordinatensystem der tatsächlichen Realität existiert, durch eine Transformation in das Koordinatensystem der Anzeigevorrichtung übertragen, so dass sie in diesem Koordinatensystem dem Benutzer angezeigt werden kann. Entsprechende Transformationen finden selbstverständlich auch bei der Darstellung des Manipulatorarms statt, sofern dieser beispielsweise in Form einer virtuellen oder augmentierten Realität angezeigt wird.

Es ist weiterhin bevorzugt, dass zusätzlich zur Position und Lage der Begrenzung des Arbeitsraumes in der Anzeigevorrichtung eine oder mehrere der folgenden Informationen dargestellt werden:
- Abstand des mindestens einen Manipulatorarms (10, 10') zur Begrenzung (12),
- Richtung der Begrenzung vom mindestens einen Manipulatorarm (10, 10') betrachtet,
- Typ der Begrenzung, nämlich translatorisch, rotatorisch oder verkoppelt,
- Vorrichtung, durch die die Begrenzung verursacht wird, nämlich Eingabevorrichtung und/ oder Manipulatorarm (10, 10').

Verkoppelt ist eine Begrenzung dann, wenn sie nicht durch reine translatorische oder rotatorische Richtungen beschrieben werden kann, sondern vielmehr eine Kombination beider darstellt.

Durch diese Information ist es dem Benutzer möglich, die kinematische Begrenzung des Arbeitsraumes, die er möglicherweise durch die Feedback-Vorrichtung spürt, besser zu beurteilen und möglicherweise an dieser Begrenzung vorbei zu operieren.

Es ist weiterhin bevorzugt, dass zusätzlich zur Position und Lage der Begrenzung des Arbeitsraumes in der Anzeigevorrichtung eine Information darüber angezeigt wird, wie der Benutzer eine kinematische Begrenzung umgehen kann. Hierzu kann beispielsweise eine Zielposition des Manipulatorarms oder eines hiermit verbundenen Instruments angezeigt werden. Dies kann beispielsweise in Form eine transparenten Darstellung des Manipulatorarms oder des mit diesem verbundenen Instruments geschehen. Weiterhin ist eine schematische Darstellung, beispielsweise in Form eines Linienmodells möglich. Eine Begrenzung des Arbeitsraumes kann auch durch ein Umkonfigurieren des Nullraums umgangen werden. Dies bedeutet, dass Gelenkwinkel umkonfiguriert, nämlich verfahren werden, ohne dass sich die Lage des Instruments verändert.

Der Arbeitsraum kann beispielsweise im Hinblick auf eine translatorische oder rotatorische Bewegung des Manipulatorarms begrenzt sein. Eine translatorische Begrenzung des Arbeitsraums kann angezeigt werden durch eine virtuelle Wand oder Scheibe, die als Arbeitsraumgrenze in der virtuellen oder augmentierten Realität in der Anzeigevorrichtung angezeigt wird. Eine rotatorische Begrenzung des Arbeitsraums kann zusätzlich oder alternativ hierzu angezeigt werden durch einen kreissegmentförmigen oder rotierenden Pfeil.

Es ist erfindungsgemäß vorgesehen, dass zusätzlich zur Position und Lage der Begrenzung des Arbeitsraumes in der Anzeigevorrichtung eine Information darüber, wie der Benutzer die kinematische Begrenzung umgehen kann, durch die animierte Darstellung eines virtuellen Objekts in der virtuellen oder augmentierten Realität angezeigt wird. Bei diesem virtuellen Objekt kann es sich beispielsweise um einen sich bewegenden oder blinkenden Pfeil handeln. Durch diese animierte Darstellung des virtuellen Objekts, kann die Aufmerksamkeit des Benutzers erregt werden, so dass dieser auf die kinematische Begrenzung des Arbeitsraumes aufmerksam gemacht wird. Eine animierte Darstellung kann beispielsweise dann ausgelöst werden, wenn der Abstand des Manipulatorarms zu der Arbeitsraumbegrenzung einen definierten Schwellwert unterschreitet. Somit kann sichergestellt werden, dass der Benutzer seine volle Aufmerksamkeit der Operation widmen kann und eine Arbeitsraumbegrenzung lediglich bei einer zu starken Annäherung des Manipulatorarms an diese Begrenzung berücksichtigen muss.

Es ist weiterhin bevorzugt, dass die kinematische Begrenzung des Arbeitsraumes durch ein virtuelles Objekt in der virtuellen oder augmentierten Realität angezeigt wird, wobei zum Darstellen weiterer Informationen bezüglich der Arbeitsraumbegrenzung eine oder mehrere der folgenden Eigenschaften des virtuellen Objekts variiert werden: Geschwindigkeit seiner Animation, Ort, Orientierung, Größe, Transparenz, Farbe, Helligkeit, Länge und Dicke des virtuellen Objekts, Schattierung, Muster und/ oder Textur. Durch die Variation der genannten Eigenschaften ist es möglich, auf sehr intuitive Weise Informationen über Art, Lage, usw. der Arbeitsraumbegrenzung darzustellen. Dies trägt weiterhin dazu bei, dass der Benutzer seine ungeteilte Aufmerksamkeit der Durchführung der Operation widmen kann.

Weiterhin ist es bevorzugt, dass ein automatischer und/ oder ein manueller Betriebsmodus existieren. Wird der Telemanipulations-Roboter im manuellen Betriebsmodus betrieben, kann der Benutzer die Anzeige der Arbeitsraumbegrenzung auf der Anzeigevorrichtung manuell aktivieren. Im automatischen Modus dagegen wird die Arbeitsraumbegrenzung angezeigt sobald ein definierter Schwellwert für den Abstand des mindestens einen Manipulatorarms zur Arbeitsraumbegrenzung unterschritten wird.

Wird gleichzeitig der Abstand zu mehreren Begrenzungen des Arbeitsraumes unterschritten, so können mehrere kinematische Begrenzungen des Arbeitsraumes gleichzeitig auf der Anzeigevorrichtung angezeigt werden.

Weiterhin ist es bevorzugt, dass die Information, wie der Benutzer die kinematische Begrenzung umgehen kann, angezeigt wird, in Form eines im kartesischen Raum der Anzeigevorrichtung dargestellten Weges, der aus der Begrenzung des Arbeitsraumes hinausführt. Sofern beispielsweise in räumlicher Nähe zueinander mehrere Arbeitsraumbegrenzungen existieren, kann es sein, dass der Weg, der von diesen Arbeitsraumbegrenzungen wegführt, kein gerader Weg ist. Somit kann dieser Weg beispielsweise in Form eines nicht gerade verlaufenden, insbesondere gebogenen oder mehrfach abgewinkelten Pfeils angezeigt werden. Der Benutzer muss somit nur noch dem angezeigten Weg folgen, um den Manipulatorarm aus der Begrenzung des Arbeitsraumes hinaus zu führen.

Im Folgenden werden bevorzugte Ausführungsformen der Erfindung anhand von Figuren erläutert:
Es zeigen:
   - Figur 1: eine schematische Darstellung einer angezeigten Arbeitsraumbegrenzung und
   - Figur 2: eine Darstellung des Wegs aus der Arbeitsraumbegrenzung hinaus.

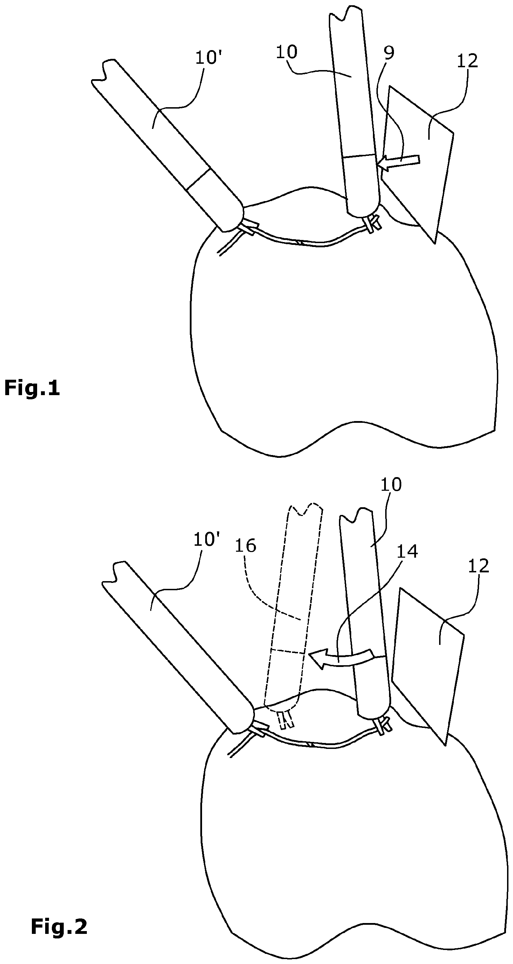

In Figur 1 ist in schematischer Weise ein Operationssitus dargestellt. Telemanipulations-Roboter können beispielsweise in der minimalinvasiven Chirurgie eingesetzt werden. Hierbei erfolgt die Manipulation am Operationssitus in der Regel durch mehrere Manipulatorarme 10 und 10', an deren Enden chirurgische Instrumente befestigt sind.

In Figur 1 ist eine Begrenzung des Arbeitsraumes durch das Rechteck 12 dargestellt. Hinter dieser Arbeitsraumbegrenzung kann beispielsweise ein Blutgefäß verlaufen, das nicht verletzt werden darf. Somit ist es den Manipulatorarmen 10, 10' softwareseitig untersagt, sich in der Figur 1 nach rechts über die Arbeitsraumbegrenzung 12 hinaus zu bewegen. Diese Arbeitsraumbegrenzung kann der Benutzer auf der Anzeigevorrichtung intuitiv erkennen. Auf der Anzeigevorrichtung kann beispielsweise das Bild, wie es in Figur 1 dargestellt ist, sichtbar sein.

Um dem Benutzer das Auffinden eines Weges aus der Arbeitsraumgrenze 12 zu erleichtern, kann gemäß Figur 2 dieser Weg durch ein virtuelles Objekt, beispielsweise einen Pfeil 14 augmentiert dargestellt werden. Weiterhin ist eine fotorealistische Darstellung 16 des Manipulatorarms oder des mit diesem verbundenen Endeffektors in der Zielkonfiguration möglich. Somit weiß der Benutzer in welche Richtung er den Manipulatorarm bewegen muss, um den Weg aus der Arbeitsraumgrenze zu finden.

Weiterhin ist es möglich, zusätzliche Informationen auf der Anzeigevorrichtung darzustellen. Z. B. kann der Abstand des Manipulatorarms zu der Arbeitsraumbegrenzung 12 angezeigt werden. Dieser Abstand kann je nach Anwendungsfall im Gelenkraum als Winkelabstand oder im kartesischen Raum als Distanz angegeben werden.

Sofern mehrere verschiedene Wege existieren, auf denen der Manipulatorarm von der Arbeitsraumbegrenzung wegbewegt werden kann, können diese verschiedenen Wege auf der Anzeigevorrichtung sequentiell oder gleichzeitig angezeigt werden.

## Patentansprüche

1. Verfahren zum Steuern eines Telemanipulations-Roboters, der mindestens einen Manipulatorarm (10, 10') aufweist, der durch eine Eingabevorrichtung von einem Benutzer steuerbar ist,
wobei der Telemanipulations-Roboter eine Anzeigevorrichtung aufweist, durch die die Bewegungen des mindestens einen Manipulatorarms (10, 10') und/ oder der Operationssitus, in dem der Manipulatorarm (10, 10') operiert, dem Benutzer angezeigt werden,
wobei eine kinematische Begrenzung (12) des Arbeitsraums, in dem der mindestens eine Manipulatorarm (10, 10') operieren kann und/ oder darf, in der Anzeigevorrichtung grafisch angezeigt wird,
**dadurch gekennzeichnet,**
**dass** zusätzlich zur Position und Lage der Begrenzung (12) des Arbeitsraumes in der Anzeigevorrichtung eine Information darüber, wie der Benutzer eine kinematische Begrenzung (12) umgehen kann, durch die animierte Darstellung eines virtuellen Objekts (14), angezeigt wird.

2. Verfahren nach Anspruch 1, **dadurch gekennzeichnet, dass** die Position und Lage einer Begrenzung (12) des Arbeitsraumes in dem Koordinatensystem der tatsächlichen Realität in das kartesische Koordinatensystem der Anzeigevorrichtung transformiert werden und dort insbesondere in Form einer virtuellen oder augmentierten Realität angezeigt werden.

3. Verfahren nach Anspruch 1 oder 2, **dadurch gekennzeichnet, dass** zusätzlich zur Position und Lage der Begrenzung (12) des Arbeitsraumes in der Anzeigevorrichtung eine oder mehrere der folgenden Informationen dargestellt werden:
- Abstand des mindestens einen Manipulatorarms (10, 10') zur Begrenzung (12),
- Richtung der Begrenzung vom mindestens einen Manipulatorarm (10, 10') betrachtet,
- Typ der Begrenzung, nämlich translatorisch, rotatorisch oder verkoppelt,
- Vorrichtung, durch die die Begrenzung verursacht wird, nämlich Eingabevorrichtung und/ oder Manipulatorarm (10, 10').

4. Vorrichtung nach einem der Ansprüche 1 bis 3, **dadurch gekennzeichnet, dass** zusätzlich zur Position und Lage der Begrenzung (12) des Arbeitsraumes in der Anzeigevorrichtung eine Information darüber angezeigt wird, wie der Benutzer eine kinematische Begrenzung umgehen kann, insbesondere durch Anzeige einer Zielposition (16) des Manipulatorarms (10, 10') oder eines hiermit verbundenen Instruments und insbesondere durch Anzeige eines transparenten Geräts, einer schematischen Darstellung, beispielsweise in Form eines Linienmodells.

5. Verfahren nach einem der Ansprüche 1 bis 4, **dadurch gekennzeichnet, dass** eine translatorische Begrenzung (12) des Arbeitsraumes angezeigt wird, durch eine virtuelle Wand oder Scheibe, die als Arbeitsraumgrenze in der virtuellen oder augmentierten Realität in der Anzeigevorrichtung angezeigt wird und/ oder eine rotatorische Begrenzung des Arbeitsraums angezeigt wird, durch einen kreissegmentförmigen oder rotierenden Pfeil.

6. Verfahren nach einem der Ansprüche 1 bis 5, **dadurch gekennzeichnet, dass** die kinematische Begrenzung (12) des Arbeitsraums durch ein virtuelles Objekt (14) in der virtuellen oder augmentierten Realität angezeigt wird und insbesondere zum Darstellen weiterer Informationen bezüglich der Arbeitsraumbegrenzung (12) eine oder mehrere der folgenden Eigenschaften des virtuellen Objekts (14) variiert werden: Geschwindigkeit seiner Animation, Ort, Orientierung, Größe, Transparenz, Farbe, Helligkeit, Länge und Dicke des virtuellen Objekts (14), Schattierung, Muster und/ oder Textur.

7. Verfahren nach einem der Ansprüche 1 bis 6, **dadurch gekennzeichnet, dass** ein automatischer und/ oder ein manueller Betriebsmodus existieren, wobei im manuellen Betriebsmodus der Benutzer die Anzeige der Arbeitsraumbegrenzung (12) manuell aktivieren kann und im automatischen Modus der Arbeitsraumbegrenzung (12) angezeigt wird, sobald ein definierter Schwellwert für den Abstand (a) des mindestens einen Manipulatorarms (10, 10') zur Arbeitsraumbegrenzung (12) unterschritten wird.

8. Verfahren nach Anspruch 4, **dadurch gekennzeichnet, dass** die Information, wie der Benutzer die kinematische Begrenzung (12) umgehen kann, angezeigt wird in Form eines kartesischen Raum der Anzeigevorrichtung dargestellten Weges (14), der aus der Begrenzung (12) führt.

## Claims

1. Method for controlling a telemanipulation robot comprising at least one manipulator arm (10, 10') adapted to be controlled by a user via an input device,
wherein the telemanipulation robot has a display device on which the movements of the at least one manipulator arm (10, 10') and/or the surgical site in which the manipulator arm (10, 10') operates are displayed to the user,
wherein the display device graphically shows a kinematic limit (12) of the working space in which the at least one manipulator arm (10, 10') can and/or is allowed to operate,
**characterized in that**
in addition to the position and orientation of the limit (12) of the working space, the display device uses an animated representation of a virtual object (14) to show information on how the user can overcome a kinematic limit (12).

2. Method of claim 1, **characterized in that** the position and the orientation of a limit (12) of the working space in the coordinate system of the actual reality are transformed into the Cartesian coordinate system of the display device and are displayed in the same in particular in the form of a virtual or augmented reality.

3. Method of claim 1 or 2, **characterized in that** in addition to the position and orientation of the limit (12) of the working space, the display device displays one or a plurality of the following information:
- distance of the at least one manipulator arm (10, 10') to the limit (12),
- direction of the limit as seen from the at least one manipulator arm (10, 10'),
- type of the limit, namely translational, rotational or coupled,
- device which causes the limit, namely the input device and/or the manipulator arm (10, 10').

4. Device of one of claims 1 to 3, **characterized in that** in addition to the position and orientation of the limit (12) of the working space, the display device displays information on how the user can overcome a kinematic limit, in particular by displaying a target position (16) of the manipulator arm (10, 10') or of an instrument connected therewith and in particular by displaying a transparent apparatus or a schematic representation, e.g. in the form of a line model.

5. Method of one of claims 1 to 4, **characterized in that** a translational limit (12) of the working space is displayed as a virtual wall or disk shown on the display device as a working space boundary in the virtual or augmented reality and/or a rotational limit of the working space is displayed as a circular-segment shaped or rotating arrow.

6. Method of one of claims 1 to 5, **characterized in that** the kinematic limit (12) of the working space is shown as a virtual object (14) in the virtual or augmented reality and **in that**, in particular for the representation of further information with respect to the working space limit (12), one or a plurality of the following characteristics of the virtual object (14) are varied: speed of its animation, position, orientation, size, transparency, color, brightness, length and thickness of the virtual object (14), shading, pattern and/or texture.

7. Method of one of claims 1 to 6, **characterized in that** an automatic and/or a manual operating mode exist, wherein in the manual operating mode the user can activate the display of the working space limit (12) manually and the working space limit (12) is displayed in the automatic mode as soon as a defined threshold value for the distance (a) of the at least one manipulator arm (10, 10') to the working space limit (12) is undershot.

8. Method of claim 4, **characterized in that** the information on how the user can overcome the kinematic limit (12) is displayed in form of a path (14) shown in the Cartesian space on the display device, the path leading beyond the limit (12).

## Revendications

1. Procédé de commande d'un robot à télémanipulation qui comprend au moins un bras manipulateur (10, 10') qui est conçu pour être commandé par un utilisateur à l'aide d'un dispositif d'entrée,
le robot à télémanipulation comprenant un dispositif d'affichage par lequel les mouvements dudit au moins un bras manipulateur (10, 10') et/ou le site d'opérations dans lequel le bras manipulateur (10, 10') opère sont affichés à l'utilisateur,
une limitation cinématique (12) de l'espace de travail dans lequel le bras manipulateur (10, 10') peut et/ou est autorisé d'opérer, étant affichée graphiquement sur le dispositif d'affichage,
**caractérisé en ce que**
outre la position et la situation de la limitation (12) de l'espace de travail, une information concernant la façon de laquelle un utilisateur peut contourner une limitation cinématique (12) est affiché sur le dispositif d'affichage par la représentation animée d'un objet virtuel (14).

2. Procédé selon la revendication 1, **caractérisé en ce que** la position et la situation d'une limitation (12) de l'espace de travail dans le système de coordonnées de la réalité de faits sont transformées dans le système de coordonnées cartésien du dispositif d'affichage et y sont affichées notamment sous la forme d'une réalité virtuelle ou augmentée.

3. Procédé selon la revendication 1 ou 2, **caractérisé en ce que**, outre la position et la situation de la limitation (12) de l'espace de travail, une ou plusieurs des informations suivantes sont représentées :
- distance dudit au moins un bras manipulateur (10, 10') de la limitation (12),
- direction de la limitation vue à partir dudit au moins un manipulateur (10, 10'),
- type de limitation, à savoir à translation, à rotation ou combinée,
- dispositif par lequel la limitation est causée, à savoir le dispositif d'entrée et/ou le bras manipulateur (10, 10').

4. Procédé selon l'une des revendications 1 à 3, **caractérisé en ce que**, outre la position et la situation de la limitation (12) de l'espace de travail, il est affiché sur le dispositif d'affichage une information sur la façon de laquelle l'utilisateur peut contourner une limitation (12), notamment par affichage d'une position cible (16) du bras manipulateur (10, 10') ou d'un instrument relié à celui-ci ou notamment par affichage d'un appareil transparent, d'une représentation schématique, notamment sous la forme d'un modèle de lignes.

5. Procédé selon l'une des revendications 1 à 4, **caractérisé en ce qu'**une limitation en translation (12) de l'espace de travail est affichée par une paroi virtuelle ou un disque virtuel qui est affiché sur le dispositif d'affichage dans la réalité virtuelle ou augmentée et/ou qu'une limitation en rotation de l'espace de travail est affichée par une flèche en forme de segment de cercle ou rotative.

6. Procédé selon l'une des revendications 1 à 5, **caractérisé en ce que** la limitation cinématique (12) de l'espace de travail est affichée par un objet virtuel (14) dans la réalité virtuelle ou augmentée, et que, notamment pour la représentation d'autres informations relatives à la limitation de l'espace de travail (12), une ou plusieurs caractéristiques suivantes de l'objet virtuel (14) sont variées : vitesse de son animation, lieu, orientation, taille, transparence, couleur, luminosité, longueur et épaisseur de l'objet virtuel (14), ombrage, motif et/ou texture.

7. Procédé selon l'une des revendications 1 à 6, **caractérisé en ce qu'**il existe un mode de fonctionnement automatique et/ou un mode de fonctionnement manuel, en mode de fonctionnement manuel, l'utilisateur pouvant activer manuellement l'affichage de la limitation de l'espace de travail (12) et en mode automatique, la limitation de l'espace de travail (12) étant affichée dès que la distance (a) dudit au moins un bras manipulateur (10, 10') de la limitation de l'espace de travail (12) passe sous une valeur seuil définie pour ladite distance.

8. Procédé selon la revendication 4, **caractérisé en ce que** l'information comment l'utilisateur peut contourner la limitation cinématique (12), est affichée sous la forme d'un chemin (14), affiché dans l'espace cartésien du dispositif d'affichage, qui conduit en dehors de la limitation (12).
